(19) Europäisches Patentamt
European Patent Office
Office européen des brevets

(11) EP 1 750 249 A1

(12) EUROPEAN PATENT APPLICATION
published in accordance with Art. 158(3) EPC

(43) Date of publication:
07.02.2007 Bulletin 2007/06

(21) Application number: 05726625.6

(22) Date of filing: 17.03.2005

(51) Int Cl.:
*G10K 11/16* (2006.01) *B64F 1/26* (2006.01)
*G01M 15/00* (2006.01) *G10K 11/172* (2006.01)

(86) International application number:
PCT/JP2005/004781

(87) International publication number:
WO 2005/116990 (08.12.2005 Gazette 2005/49)

(84) Designated Contracting States:
AT BE BG CH CY CZ DE DK EE ES FI FR GB GR HU IE IS IT LI LT LU MC NL PL PT RO SE SI SK TR

(30) Priority: 27.05.2004 JP 2004157817

(71) Applicant: KAWASAKI JUKOGYO KABUSHIKI KAISHA
Kobe shi, Hyogo 650-8670 (JP)

(72) Inventors:
- AOKI, Makoto
Kobe-shi,
Hyogo 655-0885 (JP)
- ODA, Mitsuaki
6512277 (JP)
- SATOMI, Takayuki
3440021 (JP)

(74) Representative: GROSSE BOCKHORNI SCHUMACHER
Forstenrieder Allee 59
81476 München (DE)

# (54) SOUND ABSORBING DEVICE FOR ULTRA-LOW FREQUENCY SOUND

(57) An infrasound absorbing structure is simple in construction and is capable of effectively controlling infrasonic noises. The infrasound absorbing structure is applied to an engine test cell or an engine runup hangar to reduce infrasonic noises generate therein. The infrasound absorbing structure includes a porous layer facing an infrasound source, and a back wall disposed opposite to the porous layer so as to define a back air layer of a thickness between 2 and 10 m between the porous layer and the back wall. The porous layer has a surface density in the range of 0.5 to 10 kg/m$^2$.

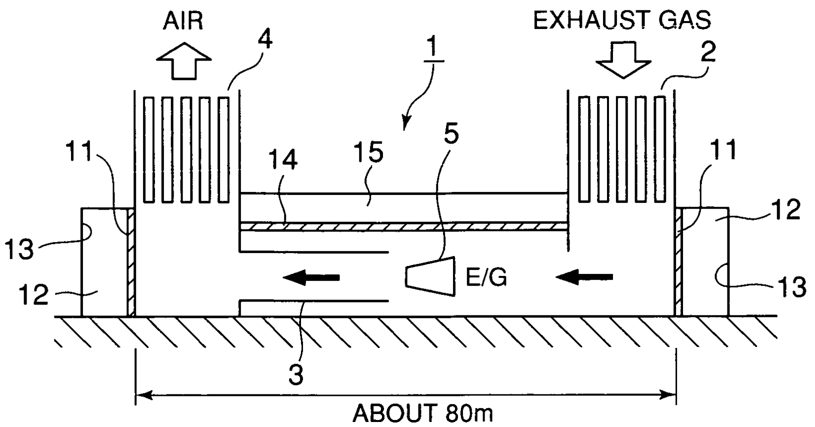


FIG. 1

EP 1 750 249 A1

## Description

TECHNICAL FIELD

The present invention relates to a sound absorbent structure capable of absorbing sound waves of frequencies in the infrasonic frequency range and, more particularly, to a sound absorbent structure to be applied to facilities that generates sound waves of frequencies not higher than 20 Hz to absorb infrasounds for environmental protection.

BACKGROUND ART

Although infrasonic noises of frequencies between 1 and 20 Hz are inaudible, such infrasonic noises having long wavelengths propagate to distant places and cause not only physical problems including rattling of fittings but also psychological problems including nausea and irritation and physiological problems including headache and insomnia.
For example, there are many machines which can be sources of infrasonic noises, such as machines installed in plants and vibration screens used to sort rock and aggregate dug from the ground by subway construction work, even in urban areas.
Jet streams generated by jet engines generate intense fluid noise of frequencies in a wide frequency range. Facilities for operating a jet engine in a space surrounded by walls, such as jet engine testing cells and engine runup hangars, resonate according to scale. Some large facilities emit noises of infrasonic frequencies not higher than 20 Hz and cause troubles to distance places.
Soundproof structures are disclosed in Patent documents 1 to 3.
A soundproof structure disclosed in JP 2001-032400 A (Patent document 1) is a soundproof panel. Soundproof panels disclosed in Patent document 1 are assembled to build soundproof walls for surrounding a construction site to confine noises generated at the construction site. The soundproof panel includes a frame and a sound absorbing structure framed in the frame. The frame is provided on its periphery with joining parts for connecting the frame to that of another soundproof structure. The sound absorbing structure is a multilayered structure formed by superposing a steel plate layer, a reinforced concrete layer, an air layer, and sound absorbing layer in that order. The sound absorbing structure is held in the frame by reinforcing members.
The soundproof wall can be readily built by arranging the soundproof panels disclosed in Patent document 1 side by side and fastening together with bolts. The soundproof wall can be easily removed without destructing the soundproof walls. Thus the soundproof walls can be repeatedly used and can be neatly and stably stacked up for storage.
Since the soundproof structure of the soundproof panel is formed by superposing different types of sound absorbing members, the soundproof panel can prevent the diffusion of ordinary noises of frequencies in the range of 20 Hz to 10 kHz, and has a certain sound isolating effect on infrasonic noises of frequencies not higher than 20 Hz. The thicker the reinforced concrete layer or the smaller the intervals of the reinforcing members, the higher is the effect in isolating low-frequency noises.
For example, when a wall is built by assembling the soundproof panels each of a 6 mm thick reinforcing member, a 2.3 mm thick the steel plate layer, 150 mm thick reinforced concrete layer, a 35 mm thick air layer and a 50 mm thick sound absorbing layer, the difference in sound pressure level of a infrasonic noise of 16 Hz between a position outside the wall and a position inside the wall was 32 dB.
The air layer is indispensable because the sound absorbing layer and the air layer absorb vibrations. The air layer formed inside the soundproof panel can be formed only in a comparatively small thickness of 35 mm.
A sound absorbing structure disclosed in Patent document 2 for surrounding a machine, namely, a noise source, reduces the sound pressure level of noises leaked outside the sound absorbing structure by attenuating and absorbing infrasounds
It has been common knowledge that a multilayer sound absorbing structure needs to have many layers, such as six layers to absorb infrasounds effectively, and an air layer must be formed between sound absorbing layers.
The multilayer sound absorbing structure disclosed in Patent document 2 is a four-layer structure having a first layer of a hard, porous material, such as gas concrete, a second layer of a soft, porous material, such as glass wool, a third layer of a hard, porous material, such as rock wool, and a fourth layer of air, and capable of effectively absorbing sounds. The fourth layer, namely, an air layer, is formed between the third layer and a sound insulating plate.
In the multilayer sound absorbing structure, the first and the third layer are the mass, the second layer is a damper and the fourth layer is a spring of a mechanical vibration system. It is considered that the mechanical vibration system attenuates the acoustic energy of infrasonic vibrations and absorbs noises.
Fig. 12 shows a multilayer sound absorbing structure in a preferred embodiment according to the present invention mentioned in Patent document 2 in a sectional view. In the multilayer sound absorbing structure shown in Fig. 12, the sum of the thicknesses of a first, a second and a third layer is 120 mm, the thickness of an air layer is 380 mm. Fig. 13 is a graph showing the sound absorbing characteristic of this sound absorbing structure in a low-frequency range.

In the graph shown in fig. 13, a maximum sound absorption coefficient of 0.5 appears in the range of 20 to 30 Hz.

A vibration screen was operated in a space surrounded by a noise barrier formed by connecting multilayer sound absorbing structures similar to this multilayer sound absorbing structure. The difference in sound pressure level between a position at 1 m outside the noise barrier and a position at 1 m outside a fence of an ordinary panel was 19 dB. The difference in sound pressure level between a range of 20 to 40 m outside the noise barrier and a position in a range of 20 to 40 m a fence of an ordinary panel was between 3.5 and 9 dB. Such differences in sound pressure level verified the significant sound pressure level lowering effect of the multilayer sound absorbing structure.

A large amount of sound energy is generated by a noise source in a building in which large engines and engines of aircraft are tested, such as an engine test cell or an engine runup hangar. Since such a building defines a substantially closed space, the building generates intense low-frequency noises by resonation.

In an engine test cell for testing a jet engine, namely, a noise source, generates intense engine operating sounds and flow noises of frequencies in the infrasonic frequency range and the high-frequency range. A standing sound wave of a particular frequency corresponding to that of resonance of the cell surrounding the noise source specific to the internal dimensions of the cell generates an intense noise. In an engine test cell defining a principal space of 80 m or 100 in length, a standing sound wave of a very long wavelength having a frequency in between 5 and 20 Hz is generated.

Generally, engine test cells and runup hangars are constructed at sites remote from densely-populated areas. However, the propagation of infrasonic sound waves must be satisfactorily restrained at the noise generating place because infrasonic sound waves propagate to a distance place.

When the soundproof walls of an engine test cell are formed by connecting soundproof panels similar to the soundproof panel disclosed in patent document 1 or multilayer sound absorbing structures similar to the multilayer sound absorbing structure disclosed in Patent document 2, the soundproof walls of complicated multilayer construction need an increased construction cost and do not have a sufficient ability to control infrasonic noises of frequencies not higher than 20 Hz. For example, the sound absorbing structure disclosed in Patent document 2 has a small sound absorption coefficient smaller than 0.5 with infrasounds of frequencies not higher than 20 Hz.

Most of the low-frequency noises generated by the engine test cell have characteristic frequencies dependent on the construction of the engine test cell. Therefore, measures to deal with sounds having such characteristic frequencies are effective in suppressing the low-frequency noises.

An engine test cell disclosed in JP 2003-307467 A (Patent document 3) is provided with a soundproof structure capable of reducing infrasonic noises of frequencies between 5 and 15 Hz. This soundproof structure is not a composite structure formed by superposing sound absorbing members in multiple layers and is characterized in using a Helmholtz resonator type silencer.

As shown in Fig. 14, the soundproof structure disclosed in patent document 3 is provided with a Helmholtz resonator type silencer having a resonance frequency nearly equal to that of the engine test cell is disposed under the floor on which the engine test cell is installed so as to communicate with the engine test cell.

Noises of frequencies around the resonance frequency are reduced efficiently by interference, noise level can be satisfactorily lowered, and noise nuisance by noises of frequencies in the infrasonic frequency range can be reduced.

As mentioned in connection with the description of an embodiment mentioned in Patent document 3, when sounds of a plurality of characteristic frequencies are generated by a building resonant to sounds of 10 Hz and 15 Hz or infrasonic noises of frequencies in frequency range are generated, a plurality of Helmholtz resonators resonant respectively to characteristic frequencies may be installed or the Helmholtz resonators may be adjusted so as to resonate to the characteristic frequencies to cope with noises of those characteristic frequencies.

A method of absorbing infrasounds by a Helmholtz resonator as mentioned in Patent document 3, however, is effective in reducing only sounds of frequencies near the resonance frequency. Therefore, many resonators are necessary for reducing noises of frequencies in a wide frequency range. Installation of the Helmholtz resonator type silencers under the floor needs an excessively high construction cost.

## DISCLOSURE OF THE INVENTION

Accordingly, it is an object of the present invention to provide a sound absorbing structure of simple construction capable of effectively controlling infrasonic noises and to provide a sound absorbing structure capable of reducing infrasonic noises of frequencies between 1 and 20 Hz generated in a space particularly in an engine test cell for testing jet engines or in an engine runup hangar for housing an aircraft for engine tests.

The present invention provides an infrasound absorbing structure including: a porous layer facing an infrasound source; and a back wall disposed opposite to the porous layer so as to define a back air layer of a thickness between 1 and 10 m between the porous layer and the back wall.

The sound absorption coefficient of a known sound absorbing structure having a back air layer is examined for sounds of frequencies not lower than several tens hertz. According to common knowledge in the relevant field, sound absorption coefficient with sounds of frequencies not higher than several tens hertz is low. Data on sound absorption coefficient with infrasounds is scarcely available. JP 10-140700 A (Patent document 2) is only a concrete technical report about absorption of infrasounds found by the inventors of the present invention. The thickness of the back air space mentioned in Patent document 2 is 380 mm.

The inventors of the present invention made studies and found a fact that a very thick back air layer of a thickness not smaller than 1 m, preferably, not smaller than 2 m is capable of very effectively absorb infrasounds, which is different from the conventional common knowledge. Infrasounds have long wavelengths. Therefore, if the combination of the porous layer and the air layer is taken for a mass-and-spring dynamic system, it is expected that the air layer must be very thick to absorb infrasounds and such a thick air layer is practically infeasible. It was found that an air layer of a practically feasible thickness between 1 and 10 m, preferably, between 2 and 10 m, most preferably, between 3 and 5 m, has a remarkable sound absorbing effect.

It was found that there is a tendency that the sound absorption coefficient is large when the porous layer disposed in front of the air layer is thin. This is an unexpected fact contrary to the conventional common knowledge that thicker sound absorbing material has a higher sound absorbing effect.

The sound absorbing structure of the present invention does not have a sharp frequency characteristic like that of a Helmholtz resonator type silencer and the sound absorption coefficient of the sound absorbing structure changes comparatively moderately with the change of frequency. Therefore, even if infrasounds to be controlled have a plurality of resonance frequencies or the frequencies of infrasounds to be controlled are distributed in a certain frequency range, the single sound absorbing structure is capable of coping with the infrasounds and does not need many silencers like the invention disclosed in Patent document 3.

A sound absorbing mechanism of a mass-damper-spring system may be applied to the infrasound absorbing structure of the present invention for absorbing sounds of a frequency $f_{mx}$ at which sound absorption coefficient reaches a maximum. Tests proved that the frequency $f_{mx}$ can be expressed by:

$$f_{mx} = 1/2\pi \times (\rho c^2/md)^{1/2}$$

where m is the surface density of the porous layer, ρ is the density of air and d is the thickness of the air layer.

More precisely, the effective sound wave velocity (complex number) in a porous layer, such as a glass wool panel, and the effective density (complex number) of the porous layer were determined by using a sound tube tester, and the sound wave velocity and the effective density were applied to a one-dimensional acoustic wave equation to determine the sound absorption coefficient of an optional combination of the thickness of the porous layer and the thickness of the back air layer.

According to the foregoing expression, a frequency at which sound absorption coefficient reaches a maximum is proportional to the square root of the density of air and inversely proportional to the square root of the product of the surface density of the porous layer and the thickness of the air layer. Therefore, a sound can be satisfactorily absorbed by increasing the surface density of the porous layer, hence the thickness of the porous layer, and the thickness of the air layer when the sound has a low frequency.

The porous layer of the sound absorbing structure of the present invention does not need to have a large surface density. Test using porous layers having surface densities in the range of 1.6 to 64 kg/$m^2$ proved that a porous layer having a surface density of 1.6 kg/$m^2$ has a maximum normal incident sound absorption coefficient between 0.9 and 1.0, a porous layer having a surface density of 8 kg/$m^2$ has a sound absorption coefficient equal to about half the largest sound absorption coefficient and a porous layer having a surface density of 16 kg/$m^2$ has a very small sound absorption coefficient equal to about one-third the largest sound absorption coefficient.

It is known from the comparison of the sound absorption coefficient of the sound absorbing structure of the present invention with the sound absorbing structure disclosed in Patent document 2 having a sound absorption coefficient on the order of 0.5 at the largest that the sound absorbing structure of the present invention has a very high sound absorbing effect. It is known from the results of the tests that the sound absorbing structure of the present invention has a sound absorbing effect higher than that of the known sound absorbing structure when the surface density is in the range of 0.5 to 10 kg/$m^2$ and the sound absorbing material has a practically acceptable thickness.

The porous layer may be a glass wool panel which is prevalently used as a sound absorbing panel. The porous layer may be a layer of any suitable sound absorbing material, such as rock wool, polyurethane foam or felt.

Tests of structures each provided with a glass wool panel having a density of, for example, 32 kg/$m^3$ showed that the structure provided with a glass wool panel having a small thickness of 50 mm had a large sound absorption coefficient, and the structures respectively provided with a glass wool panel having a thickness of 250 mm and a glass wool panel having a thickness of 500 mm had sound absorption coefficients half and one-third the sound absorption coefficient of the structure provided with the glass wool panel having a thickness of 50 mm, respectively. Thus, contrary to the conventional common knowledge, the sound absorbing effect of a sound absorbing structure provided with a thick glass wool panel is not necessarily satisfactory.

Another porous layer may be formed in a middle part of the air layer with respect to thickness. Placement of a porous layer in a middle part of the air layer without changing the thickness of the air layer sound absorption coefficient with high-frequency sounds increases and thus it is expected that the frequency range of controllable noises can be expanded.

Preferably, the surface density of the two porous layers is equal to that of the single porous layer.

The sound absorbing structure of the present invention can be used not only for effectively reducing infrasounds generated in closed spaces, but also for reducing infrasonic noises generated in open spaces.

The present invention provides a building provided with the sound absorbing structure and capable of effectively controlling infrasonic noises.

When the sound absorbing structure of the present invention is applied to a large building which is likely to generate infrasonic noises, such as an engine test cell or an engine runup hangar, the surface density of the porous layer and the thickness of the air layer are determined so as to conform to the unique natural frequency characteristics of the building because the building has dimensional elements dominating resonance frequencies with respect to directions. Thus the sound absorbing structure can effectively reduce infrasonic noises.

For example, a hangar forming a 100 m long sound field has a plurality of resonance frequencies around 1.7 Hz and hence it is preferable to control infrasonic noises generated by the hangar.

When there are different directional resonance frequencies, noise of different frequencies can be effectively reduced by using sound absorbing structures respectively conforming to directions.

When a sound absorbing structure according to the present invention includes a glass wool panel of 1.6 kg/m$^2$ in surface density and a back air layer of about 5 m in thickness, the sound absorption coefficient of the sound absorbing structure is on the order of 0.97 with a sound of 20 Hz, 0.6 with a sound of 5 Hz and 0.4 with a sound of about 3 Hz. Thus the sound absorbing effect of the sound absorbing structure of the present invention is very high as compared with those of the conventional sound absorbing structures. A sound absorbing structure formed by combining such a sound absorbing arrangement with a side wall has a very high soundproof effect.

A frequency with which the sound absorbing structure has a maximum sound absorption coefficient can be shifted toward the side of low frequencies to exercise a high sound absorbing effect in a low-frequency range by increasing the surface density of the porous layer or by increasing the thickness of the back air layer. If a desired maximum sound absorption coefficient is to appear at about 15 Hz, the porous layer having the foregoing surface density may be used and the thickness of the back air layer may be increased to about 10 m.

A sound absorbing structure based on a conventional design conception and formed by combining a glass wool layer of 64 kg/m$^3$ in density and 100 mm in thickness with a900 mm thick back air layer has a sound absorption coefficient on the order of 0.5 at 20 Hz and a sound absorption coefficient of 0.15 at the larges at 5 Hz. This sound absorbing structure is not satisfactory.

When a jet engine is tested in an engine test cell having a characteristic length of, for example, 80 m contributing to resonance of, for example 80 m, a sound absorbing structure formed by combining a porous layer of 1.6 kg/m$^2$ in surface density with a back air layer of about 4 m in thickness is capable of effectively controlling infrasonic noises generated in the engine test cell.

## BRIEF DESCRIPTION OF THE DRAWINGS

Fig. 1 is a sectional view of assistance in explaining a sound absorbing structure in a first embodiment according to the present invention;

Fig. 2 is a graph showing the frequency characteristic of the normal incident sound absorption coefficient of the sound absorbing structure in the first embodiment;

Fig. 3 is a graph of assistance in explaining the effect of the thickness of an air layer in a sound absorbing structure in an example of the present invention on normal incident sound absorption coefficient;

Fig. 4 is a graph of assistance in explaining the effect of the thickness of an air layer in a sound absorbing structure in another example of the present invention on normal incident sound absorption coefficient;

Fig 5 is a graph verifying the dependence of the frequency characteristic of the sound absorption coefficient of a porous layer on the surface density of the porous layer;

Fig. 6 is a graph showing the relation between the surface density and the sound absorption coefficient of a porous layer of a sound absorbing structure of 5 m in overall thickness;

Fig. 7 is a graph showing the relation between the surface density and the sound absorption coefficient of a porous layer of a sound absorbing structure of 3 m in overall thickness;

Fig. 8 is a graph showing the relation between the surface density and the sound absorption coefficient of a porous layer of a sound absorbing structure of 1 m in overall thickness;

Fig 9 is a graph showing the frequency characteristic of the sound absorption coefficient of the sound absorbing structure in this embodiment additionally provided with a porous layer placed in a middle part of the air layer;

Fig. 10 is a sectional view of a sound absorbing structure in a second embodiment according to the present invention;

Fig. 11 is a graph showing the frequency characteristic of the normal incident sound absorption coefficient of the sound absorbing structure in the second embodiment;

Fig. 12 is a sectional view of a prior sound absorbing structure for absorbing infrasounds;

Fig. 13 is a graph showing the frequency characteristic of the sound absorption coefficient of the sound absorbing structure shown in Fig. 12; and

Fig. 14 is sectional view of a prior art infra sonic noise absorbing structure for an engine test cell.

## BEST MODE FOR CARRYING OUT THE INVENTION

Preferred embodiments of the present invention will be described with reference to the accompanying drawings.

First Embodiment

Fig. 1 is a typical view of a sound absorbing structure in a first embodiment according to the present invention as applied to an engine test cell 1

The engine test cell 1 defines a chamber of about 80 m in length. The engine test cell 1 is provided with an intake duct 2 at one end thereof and an exhaust duct 4 at the other end thereof. An augmenter 3 for augmenting engine performance is placed in the engine test cell 1 and is connected to the exhaust duct 4. A jet engine 5 is suspended at a position on the upper side of the augmenter 3 for engine performance testing.

When the jet engine 5 is operated, sound waves of frequencies in a wide frequency range including infrasonic frequencies and high frequencies are generated by the combustion of the fuel, the vibration of the jet engine 5 and air flows on the upper and the lower side of the jet engine 5. Sound energy generated by those sound sources causes the engine test cell 1 to resonate. Consequently, the engine test cell 1 generates therein noises of various frequencies characteristic of the shape and construction of the engine test cell 1.

When the characteristic length of the engine test cell 1 contributing to resonance is big and the noise source generates a large amount of sound energy corresponding to the characteristic length, infrasonic noises, which have become to attract a great deal of attention in recent years, grow in addition to high-frequency noises and cause problems in some cases.

For example, when the chamber has a characteristic length of 80 m, a resonance wave of about 2 Hz and harmonics are likely to be generated. If the sound energy generated by the noise source includes sound energy of the resonance wave and the harmonics in a large proportion, those infrasonic noises are unignorable. A chamber having a longer characteristic length generates a fundamental of a lower frequency and its harmonics.

The sound absorbing structure in the first embodiment is formed by placing soundproof structures 12 at the opposite longitudinal ends, respectively, of the engine test cell 1. Each of the soundproof structures 12 includes a porous panel 11 and an end wall 13 spaced longitudinally apart from the porous panel 11 so as to form an air chamber. The porous panels 11 face the interior of the engine test cell 1.

The porous layers 11 are glass wool panels, which are sound absorbing panels readily available on the market. The porous layers 11 have a proper surface density and a proper thickness. The distance between the porous layer 11 and the end wall 13, namely, the thickness of an air layer extending between the porous layer 11 and the end wall 13, is determined on the basis of the frequencies of sounds to be attenuated.

Naturally, soundproof structures 14 and 15 similar to the soundproof structures 12 may be disposed contiguously with the ceiling and the side walls of the engine test cell 1. The soundproof structures 14 and 15 placed contiguously with the ceiling and the side walls may be analogous with the soundproof structures 12 or may be those capable of controlling noises of higher frequencies generated in the engine test cell 1.

Fig. 2 show frequency characteristics of the respective measured sound absorption coefficients of a soundproof structure in an example of the present invention and a soundproof structure of a conventional design in a comparative example.

The soundproof structure according to the present invention includes a glass wool panel of 1.6 $kg/m^2$ in surface density and a back air space of 4 m in thickness extending behind the glass wool panel. The soundproof structure according to the present invention is designed so as to have a maximum sound absorption coefficient with a sound of 23 Hz.

The soundproof structure in a comparative example is of known soundproof construction generally thought to be suitable for controlling low-frequency noises. This soundproof structure includes a glass wool panel of 3.2 $kg/m^2$ in surface density and a back air space of 300 mm extending behind the glass wool panel.

In Fig. 2, the frequency of sound waves is measured on the horizontal axis and normal incident sound absorption coefficient is measured on the vertical axis. Normal incident sound absorption coefficients were measured. Normal incident sound absorption coefficients were measured by placing a test sound absorbing structure in a large sound tube tester of ten and odd meters in length, generating sounds of frequencies in the range of 1 to 33 Hz and measuring sounds by a two-microphone method.

The soundproof structure according to the present invention is designed so as to have a maximum sound absorption coefficient at 23 Hz. As obvious from Fig. 2, sound absorption coefficient changes gently with frequency and remains at a high level in a wide frequency range, which proves that the soundproof structure has a satisfactory sound absorbing effect on infrasounds. As shown in Fig. 2, the sound absorbing structure in this embodiment has sound absorption coefficients not smaller than 0.97 in the frequency range of 20 to 30 Hz and the sound absorption coefficient decreases with the decrease of frequency. The sound absorption coefficient of the sound absorbing structure is about 0.85 at 10 Hz, and is not lower than 0.4 at about 0.8 Hz.

The sound absorption coefficient of the conventional sound absorbing structure is as low as 0.3 at 30 Hz, and decreases monotonously with the decrease of frequency to a little less than 0.2 at 20 Hz and on the order of 0.07 at 10 Hz.

Thus the sound absorption coefficient of the sound absorbing structure in this embodiment is overwhelmingly greater than that of the conventional sound absorbing structure in the entire infrasonic frequency range. The sound absorbing structure as applied to the engine test cell has a high infrasonic noise control effect.

Frequency characteristics of sound absorption coefficients of various sound absorbing structures were measured under various conditions and analyzed to find an optimum combination of a porous layer and an air layer. The frequency characteristic of the sound absorption coefficient was measured by using a large sound tube tester and was analytically determined by using a one-dimensional acoustic wave equation, effective sound velocity and effective density. The measured frequency characteristic of the sound absorption coefficient and the analytically determined frequency characteristic of the sound absorption coefficient agreed satisfactorily. Measured results measured by using the large sound tube tester will be mainly described.

A frequency $f_{mx}$ at which the sound absorbing structure in this embodiment has a maximum sound absorption coefficient is the resonance frequency of a vibration system of one degree of freedom having a porous layer assumed to be a mass and a damper and a back air layer assumed to be a spring determined by using the one-dimensional acoustic wave equation. The frequency $f_{mx}$ may be calculated by using Expression (1) or (2).

$$f_{mx} = 1/2\pi \times (\rho c^2/md)^{1/2} \quad \text{.......... (1)}$$

$$md = 1/4\pi^2 \times \rho c^2/f_{mx}^2 = K/f_{mx}^2 \quad \text{.......... (2)}$$

where m is the surface density of the porous layer, ρ is the density of air, d is the thickness of the air layer and c is sound velocity.

Figs. 3 and 4 are graphs of assistance in explaining the effect of the thickness of the air layer on normal incident sound absorption coefficient.

Curves in Fig 3 show the frequency characteristics of normal incident sound absorption coefficient of sound absorbing structures including a glass wool panel of 1.6 kg/$m^2$ in surface density and about 2.5 m thick, 4 m thick and 5 m thick air layers, respectively. A curve showing the frequency characteristic of normal incident sound absorption coefficient of a sound absorbing structure including a glass wool panel of 100 mm in thickness and 3.2 kg/$m^2$ in surface density and a 5 m thick air layer is shown comparatively in Fig. 3 for reference.

Curves in Fig 4 show the frequency characteristics of normal incident sound absorption coefficient of sound absorbing structures including a glass wool panel of 3.2 kg/$m^2$ in surface density and about 1 m thick, 3 m thick and 5 m thick air layers, respectively. A curve showing the frequency characteristic of normal incident sound absorption coefficient of a sound absorbing structure including a glass wool panel of a thickness half that of the foregoing sound absorbing structures and 1.6 kg/$m^2$ in surface density and a 5 m thick air layer is shown comparatively in Fig. 4 for reference.

As obvious from Fig. 3, the sound absorbing structures including the porous layer of 1.6 kg/$m^2$ in surface density have maximum sound absorption coefficients substantially equal to 1.0 and have sufficiently large sound absorption coefficients in the frequency range of 10 to 30 Hz. The sound absorbing structure provided with a thicker air layer has its maximum sound absorption coefficient at a lower frequency and has a large sound absorption coefficient in the infrasound range. For example, the sound absorption coefficient of the sound absorbing structure of the present invention is as large as 0.55 at frequencies around 5 Hz when the thickness of the air layer is on the order of 5 m, which is a high sound absorbing effect which could not have been exercised by the conventional sound absorbing structures.

As obvious from Fig. 4, although the maximum sound absorption coefficients of the sound absorbing structures including the porous layer of 3.2 kg/$m^2$ in surface density and the 3 m thick and the 5 m thick air layer are below 1.0, those sound absorption coefficients are considerably large as compared with those of the conventional sound absorbing structures and the sound absorbing structures according to the present invention have a considerably high sound absorbing ability as compared with those of the conventional sound absorbing structures. Although the sound absorbing structure including the 1 m thick air layer has a sound absorbing coefficient as small as 0.2 at 10 Hz and is inferior in sound absorbing ability to the rest of the sound absorbing structures according to the present invention, the performance of the same sound absorbing structure is still higher than that of the conventional sound absorbing structures.

The sound absorbing structures 3 and 4 in Fig. 3 and the sound absorbing structures 8 and 7 in Fig. 4 correspond to each other, respectively, and include the porous layers of the substantially equal surface densities and the 5 m thick air layers, respectively. Although one of the glass wool panels has a density of 32 kg/$m^3$ and the other glass wool panel has a density of 64 kg/$m^3$, the sound absorbing structures 3 and 4 and the sound absorbing structures 8 and 7 have substantially the same frequency characteristics, respectively. The sound absorbing structures 4 and 7 have very similar frequency characteristics such that the frequency characteristic curves for the sound absorbing structures 4 and 7 are substantially completely coincide with each other. This fact proves that Expression (1) is proper.

Fig. 5 shows the frequency characteristics of the normal incident sound absorption coefficients of sound absorbing structures 11 to 16 including a 5 m thick air layer.

Each of the sound absorbing structures 11 and 12 includes a porous panel of 1.6 kg/$m^2$ in surface density, and each of the sound absorbing structures 13 to 16 includes a porous layer of 3.2 kg/$m^2$ in surface density. The density of a glass wool panel (GW32K) employed in the sound absorbing structures 11 and 13 is 32 kg/$m^3$. The density of a glass wool panel (GW64K) employed in the sound absorbing structures 12 and 14 is 64 kg/$m^3$. A glass wool panel (GW32K+GW64K) employed in the sound absorbing structures 11 and 13 is a composite glass wool panel having a surface density of 3.2 kg/$m^2$ formed by combining a glass wool panel (GW32K) having a density of 32 kg/$m^3$ and a glass wool panel (GW64K) having a density of 64 kg/$m^3$.

The sound absorbing structures 13 to 16 each including the glass wool panel having a high surface density have the substantially the same frequency characteristics in the entire frequency range of 3 to 33 Hz, have sound absorption coefficients on the order of 0.8 in the frequency range of 8 to 28 Hz, and have small sound absorption coefficients in frequency ranges outside the range of 8 to 28 Hz.

The sound absorbing structures 11 and 12 including the porous layer of a small surface density have maximum sound absorption coefficients as large as 1.0 and have large sound absorption coefficients in a comparatively narrow frequency range. As obvious from Fig. 5, although the sound absorbing structures 11 and 12 have maximum sound absorption coefficients at slightly different frequencies, respectively, the sound absorbing structures 11 and 12 have very similar frequency characteristics, respectively.

Thus it may be safely said that the frequency characteristic of the sound absorbing structure is dependent on the surface density of the porous layer regardless of the density of the material of the porous layer.

Figs. 6, 7 and 8 are graphs showing the results of analytical examination of the effect of the surface density of the porous layer on sound absorption coefficient. Figs. 6, 7 and 8 show the frequency characteristics of normal incident sound absorption coefficients of the sound absorbing structures respectively including a 5 m thick air layer, a 3 m thick air layer and a 1 m thick air layer, respectively, for surface densities of the porous layers as a parameter. The frequency characteristics of the normal incident sound absorption coefficients of the sound absorbing structures including a porous layer of 64 kg/$m^2$ are similar to those of the sound absorbing structures including a porous layer of 32 kg/$m^2$ and hence are not shown in Figs. 6, 7 and 8 to avoid complicating the graphs.

As obvious from Figs. 6 to 8, whereas the greater the surface density of the porous layer, the lower is the frequency at which the sound absorbing structure has a maximum sound absorption coefficient, the smaller the surface density, the larger is a maximum sound absorption coefficient. The relation between surface density and sound absorption coefficient is comparatively continuous and there is not any threshold. However, sound absorption coefficient is on the order of 0.3 when surface density is not lower than 16 kg/$m^2$ and the frequency characteristic curves do not have a prominent peak. The sound absorbing structure including a porous layer of 8 kg/$m^2$ in surface density has a moderate characteristic.

A sound absorbing structure having a bigger overall thickness, namely, a sound absorbing structure including a thicker air layer, has a maximum sound absorption coefficient at a lower frequency. Sound absorbing structures respectively of 3 m and 5 m in overall thickness exhibit a very high soundproof effect. The frequency characteristic curve of the sound absorption coefficient of a sound absorbing structure including a thicker air layer has a prominent peak.

As obvious from Fig. 8, the effect of the sound absorbing structure having an overall thickness of 1 m on controlling noises of frequencies not higher than 10 Hz is low, as compared with those of the sound absorbing structures respectively having overall thicknesses of 3 m and 5m. However, the sound absorbing structure having an overall thickness of 1 m is more effective in controlling infrasounds than conventional soundproof structures none of which can effectively control infrasounds.

Fig. 9 shows the frequency characteristics of the sound absorption coefficients of sound absorbing structures each including an additional porous layer in a middle part of an air layer. Fig. 9 shows the frequency characteristics of the normal incident sound absorption coefficients of a sound absorbing structure having an overall thickness of 5 m and including a front porous layer of 1.6 kg/$m^2$ in surface density and a back porous layer of 1.6 kg/$m^2$ in surface density

placed in a middle part of the air layer and a sound absorbing structure having an overall thickness of 5 m and including a front porous layer of 3.2 kg/$m^2$ in surface density and a back porous layer of 3.2 kg/$m^2$ in surface density placed in a middle part of the air layer. The normal incident sound absorption coefficients were measured by a large sound tube tester. Frequency characteristics of the normal incident sound absorption coefficients of soundproof structures each provided with only a front porous layer are shown in dotted lines in Fig. 9 for comparison.

As obvious from Fig. 9, the back porous layer does not improve sound absorption coefficient in an infrasonic frequency range, but expands a high-frequency range in which sound absorption coefficient is large. Thus it is expected that a sound absorbing structure provided with two porous layers is capable of effectively controlling noises in an expanded frequency range.

Naturally, the surfaces of the porous layer may be covered with protective sheets generally used for noise control. The surfaces of the porous layer may be covered with perforated plates, such as punched metal plates.

Second Embodiment

Fig. 10 is a typical view of a sound absorbing structure in a second embodiment according to the present invention as applied to an engine runup hangar 21. The sound absorption principle of the sound absorbing structure in the second embodiment is entirely the same as the sound absorption principle of the sound absorbing structure in the first embodiment and hence the detail description thereof will be omitted.

The engine runup hanger 21 defines a long chamber of about 100 m in length. The engine runup hangar 21 is provided with an intake duct 22 at one end thereof and an exhaust duct 24 at the other end thereof. Jet engines of an aircraft 23 are operated in the engine runup hangar 21 for performance tests.

The operating jet engine generates sound energy having frequencies in a wide frequency range. The sound energy makes the engine runup hangar 21 generate noises of a frequency characteristic peculiar to the engine runup hanger 21. In some cases, the engine runup hangar 21 having a long characteristic length has difficulty in controlling the generation of noises of frequencies in an infrasonic frequency range. For example, the engine runup hanger 21 generates noises including resonance waves and their harmonics of frequencies in an infrasonic frequency range when the engine runup hangar 21 has a width of 100 m.

The engine runup hanger 21 as the sound absorbing structure in the second embodiment is provided with a porous layer 31 and a back air layer 32 connected to each of its longitudinal end walls.

The surface density of the porous layer 31 and the thickness of the back air layer 32 are determined on the basis of infrasonic noises that will be generated in the engine runup hanger 21. The ceilings and the side walls of the engine runup hangar 21 may be soundproof structures 34 and 35, respectively.

Fig. 11 shows the respective frequency characteristics of the sound absorption coefficients of a soundproof structure of a characteristic length of 100 m according to the present invention and a soundproof structure of a conventional design.

The soundproof structure in an example of the present invention having a characteristic length of 100 m that contributes to resonance is designed such that the soundproof structure has a maximum sound absorption coefficient at 21 Hz. The soundproof structure in an example includes a glass wool panel of 1.6 kg/$m^2$ in surface density and a back air layer of 5 m in thickness.

The soundproof structure in a comparative example includes a glass wool panel of 6.4 kg/$m^2$ in surface density and a back air layer of 900 mm in thickness.

As shown in Fig. 11, the soundproof structure in an example has a maximum sound absorption coefficient of about 0.97 in the frequency range of 18 to 21 Hz and the sound absorption coefficients decreases gradually outside the frequency range of 18 to 21 Hz. The sound absorption coefficient decreases more gradually with the decrease of frequency on the lower side of the frequency range of 18 to 21 Hz than with the increase of frequency on the higher side of the frequency range of 18 to 21 Hz. The sound absorption coefficient is 0.87 at 10 Hz and is about 0.6 at 5 Hz. When the engine runup hangar 21 is provided with soundproof structures similar to this soundproof structure in an example, infrasounds can be effectively attenuated and the engine runup hangar 21 will not cause noise nuisance in the surroundings.

Sound absorbing structures as the ceiling and the side walls of the engine runup hangar may be designed so as to control noises of frequencies higher than those of noises for which the sound absorbing structure having the characteristic length of 100 m is designed.

The foregoing embodiments have been described on an assumption that the porous layers are glass wool panels, it is obvious that the porous layers may be those of a material other than glass wool, such as rock wool or polyurethane foam because surface density is an important factor dominating the sound absorption characteristic of the porous layer.

Although the invention has been described as applied to controlling noises generated in a closed space, the sound absorbing structure of the present invention has a sound absorbing effect on infrasounds generated in an open space. Therefore, the present invention may be practiced in a soundproof structure including a porous layer and a back air layer and capable of surrounding a noise source.

## Claims

**1.** An infrasound absorbing structure comprising:

a porous layer facing an infrasound source; and
a back wall disposed opposite to the porous layer so as to define a back air layer of a thickness between 2 and 10 m between the porous layer and the back wall.

**2.** The infrasound absorbing structure according to claim 1, wherein the porous layer has a surface density in the range of 0.5 to 10 $kg/m^2$.

**3.** The infrasound absorbing structure according to claim 1 or 2, wherein the porous layer is formed of glass wool, rock wool, polyurethane foam or felt.

**4.** The infrasound absorbing structure according to claim 1 or 2 further comprising an additional porous layer disposed in a middle part of the back air layer with respect to thickness.

**5.** A building capable of controlling infrasonic noises and having a characteristic length that contributes to resonance and an ability to generate infrasonic noises, said building comprising:

a porous layer facing an infrasound source; and
a back wall disposed opposite to the porous layer so as to define a back air layer of a thickness between 2 and 10 m between the porous layer and the back wall.

**6.** The building according to claim 5, wherein the porous layer has a surface density in the range of 0.5 to 10 $kg/m^2$.

**7.** The building according to claim 5 or 6 designed for testing a jet engine therein.

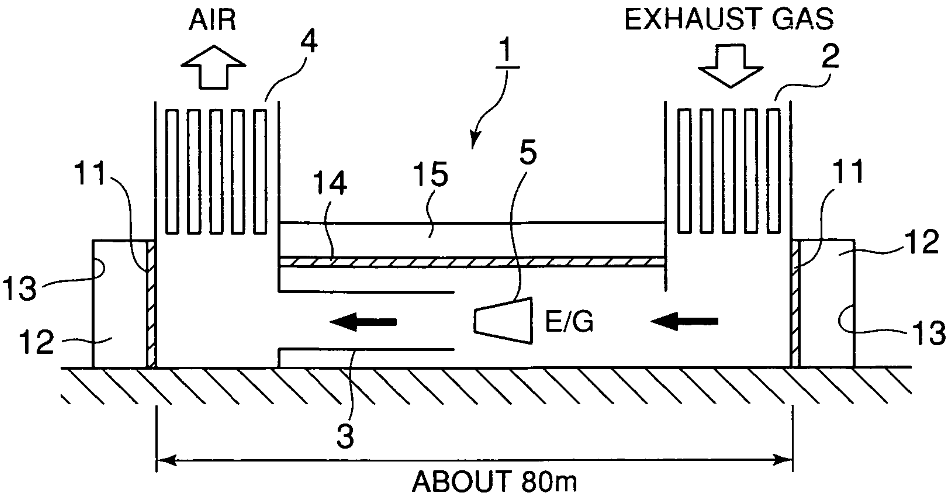
AIR
EXHAUST GAS
4
1
2
5
11
14
15
11
12
13
12
E/G
13
3
ABOUT 80m

FIG. 1

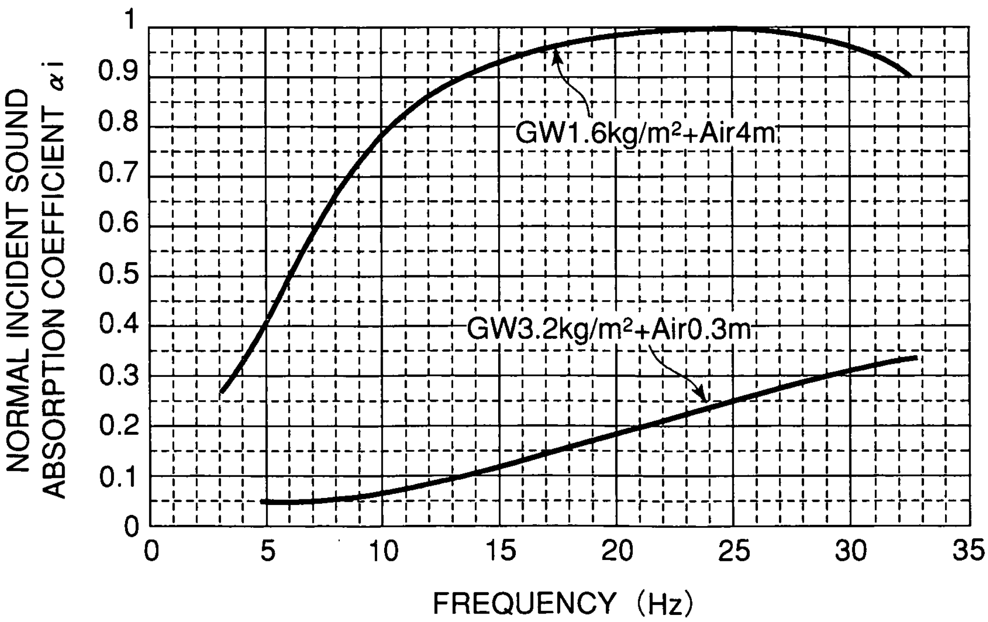
NORMAL INCIDENT SOUND ABSORPTION COEFFICIENT αi
1
0.9
0.8
0.7
0.6
0.5
0.4
0.3
0.2
0.1
0
GW1.6kg/m2+Air4m
GW3.2kg/m2+Air0.3m
0
5
10
15
20
25
30
35
FREQUENCY (Hz)

FIG. 2

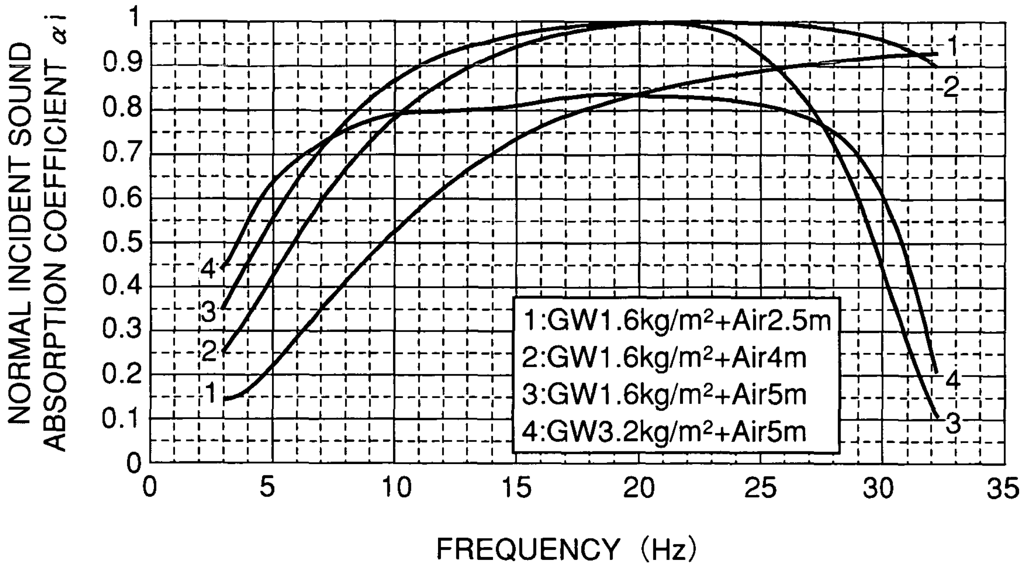
NORMAL INCIDENT SOUND ABSORPTION COEFFICIENT αi
1
0.9
0.8
0.7
0.6
0.5
0.4
0.3
0.2
0.1
0
0 5 10 15 20 25 30 35
FREQUENCY (Hz)
1:GW1.6kg/m2+Air2.5m
2:GW1.6kg/m2+Air4m
3:GW1.6kg/m2+Air5m
4:GW3.2kg/m2+Air5m
1
2
3
4

FIG. 3

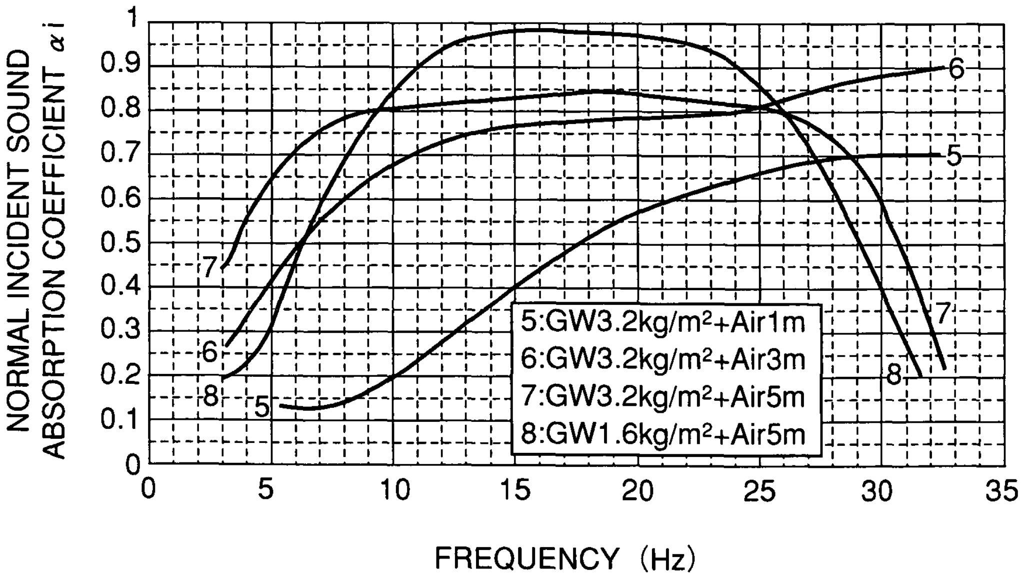
NORMAL INCIDENT SOUND ABSORPTION COEFFICIENT αi
1
0.9
0.8
0.7
0.6
0.5
0.4
0.3
0.2
0.1
0
0 5 10 15 20 25 30 35
FREQUENCY (Hz)
5:GW3.2kg/m2+Air1m
6:GW3.2kg/m2+Air3m
7:GW3.2kg/m2+Air5m
8:GW1.6kg/m2+Air5m
5
6
7
8

FIG. 4

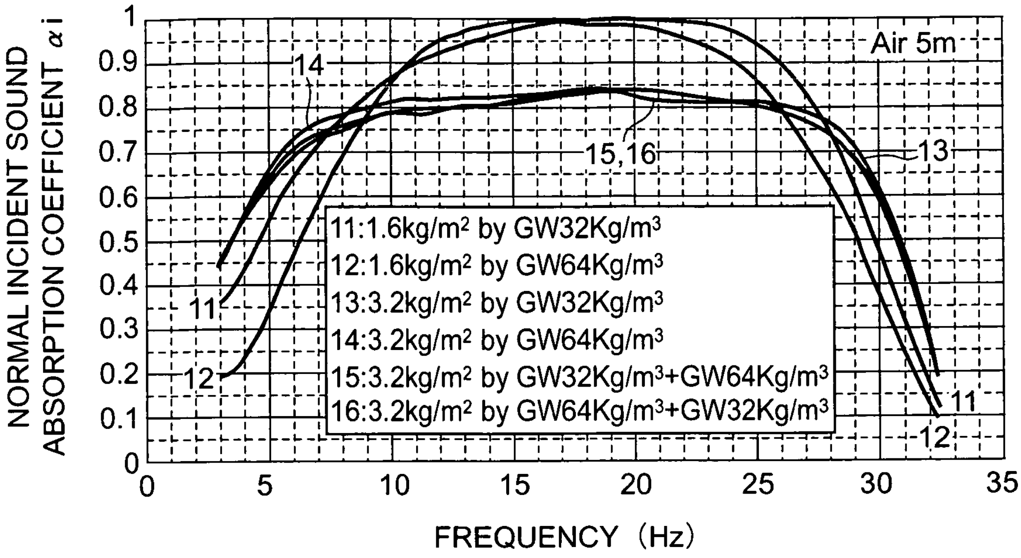
NORMAL INCIDENT SOUND ABSORPTION COEFFICIENT αi
FREQUENCY (Hz)
Air 5m
14
15,16
13
11
12
11:1.6kg/m2 by GW32Kg/m3
12:1.6kg/m2 by GW64Kg/m3
13:3.2kg/m2 by GW32Kg/m3
14:3.2kg/m2 by GW64Kg/m3
15:3.2kg/m2 by GW32Kg/m3+GW64Kg/m3
16:3.2kg/m2 by GW64Kg/m3+GW32Kg/m3

FIG. 5

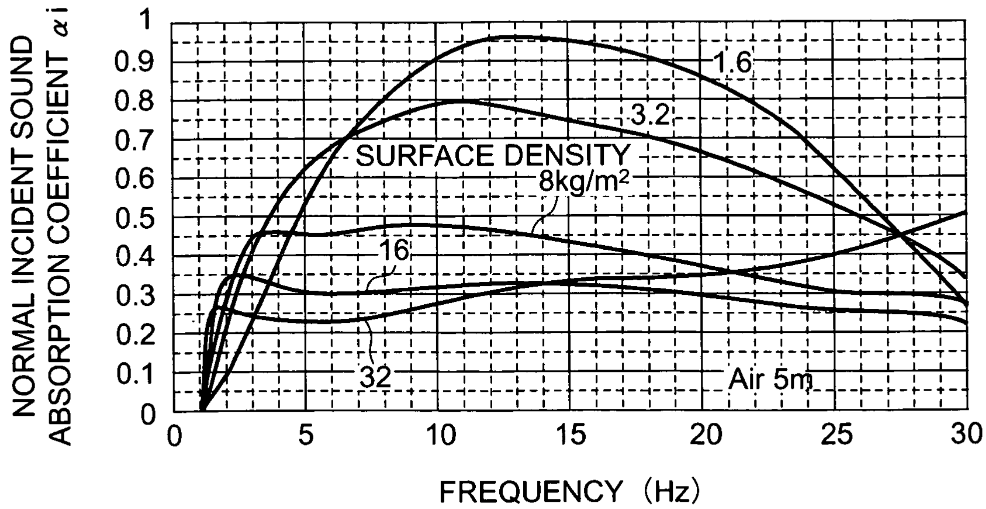
NORMAL INCIDENT SOUND ABSORPTION COEFFICIENT αi
FREQUENCY (Hz)
1.6
3.2
SURFACE DENSITY
8kg/m2
16
32
Air 5m

FIG. 6

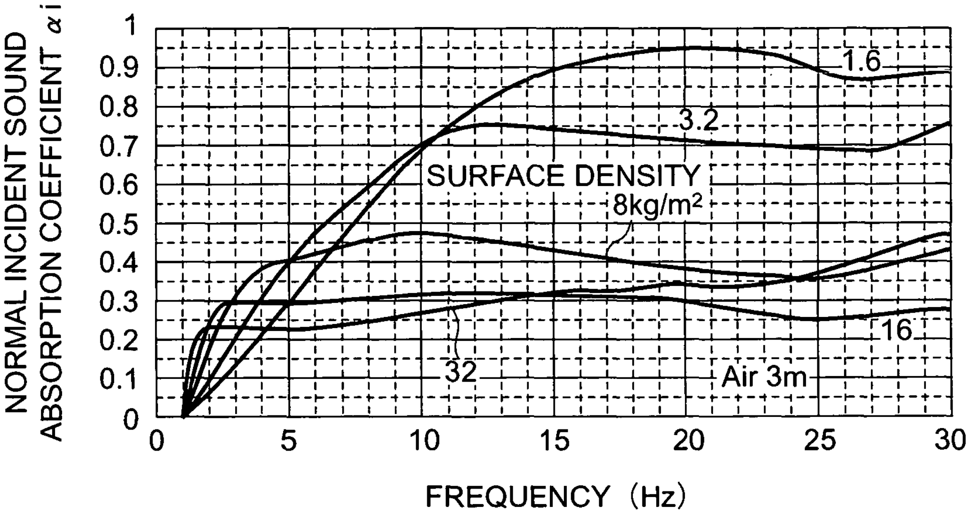
NORMAL INCIDENT SOUND ABSORPTION COEFFICIENT αi
1
0.9
0.8
0.7
0.6
0.5
0.4
0.3
0.2
0.1
0
1.6
3.2
SURFACE DENSITY
8kg/m2
16
32
Air 3m
0
5
10
15
20
25
30
FREQUENCY (Hz)

FIG. 7

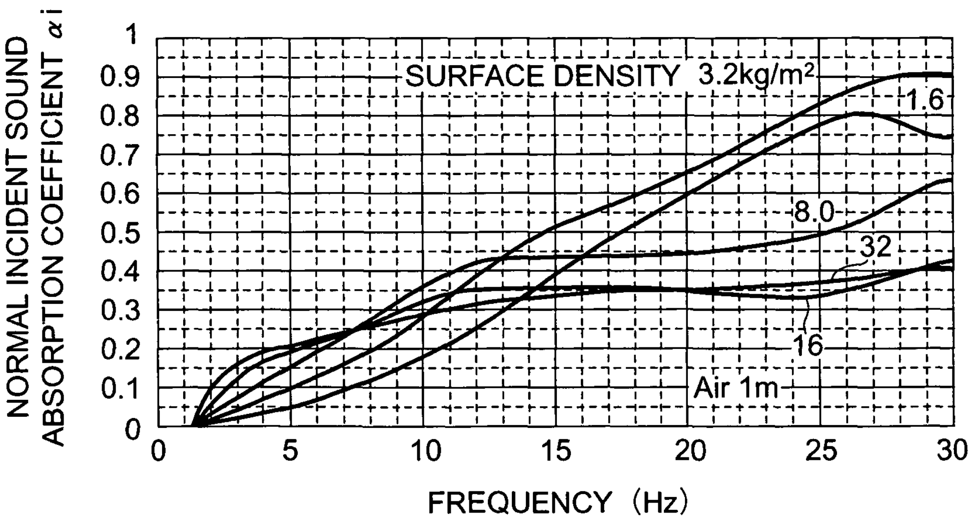
NORMAL INCIDENT SOUND ABSORPTION COEFFICIENT αi
1
0.9
0.8
0.7
0.6
0.5
0.4
0.3
0.2
0.1
0
SURFACE DENSITY 3.2kg/m2
1.6
8.0
32
16
Air 1m
0
5
10
15
20
25
30
FREQUENCY (Hz)

FIG. 8

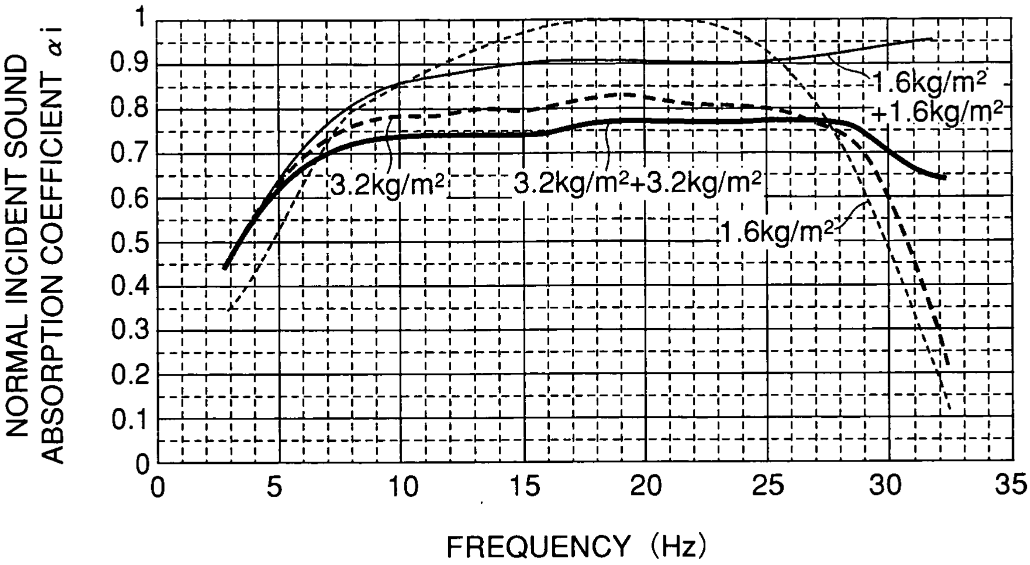
NORMAL INCIDENT SOUND ABSORPTION COEFFICIENT αi
1
0.9
0.8
0.7
0.6
0.5
0.4
0.3
0.2
0.1
0
0
5
10
15
20
25
30
35
FREQUENCY (Hz)
1.6kg/m²
+1.6kg/m²
3.2kg/m²
3.2kg/m²+3.2kg/m²
1.6kg/m²

FIG. 9

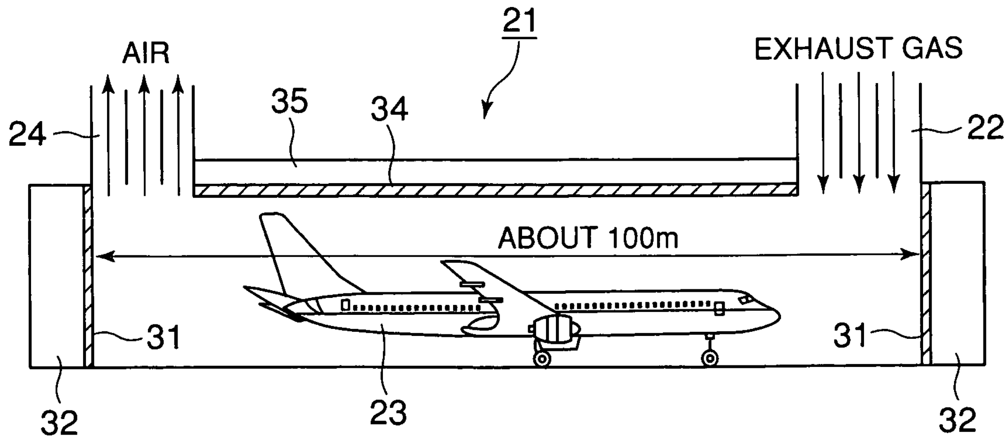
21
AIR
EXHAUST GAS
24
35
34
22
ABOUT 100m
31
31
32
23
32

FIG. 10

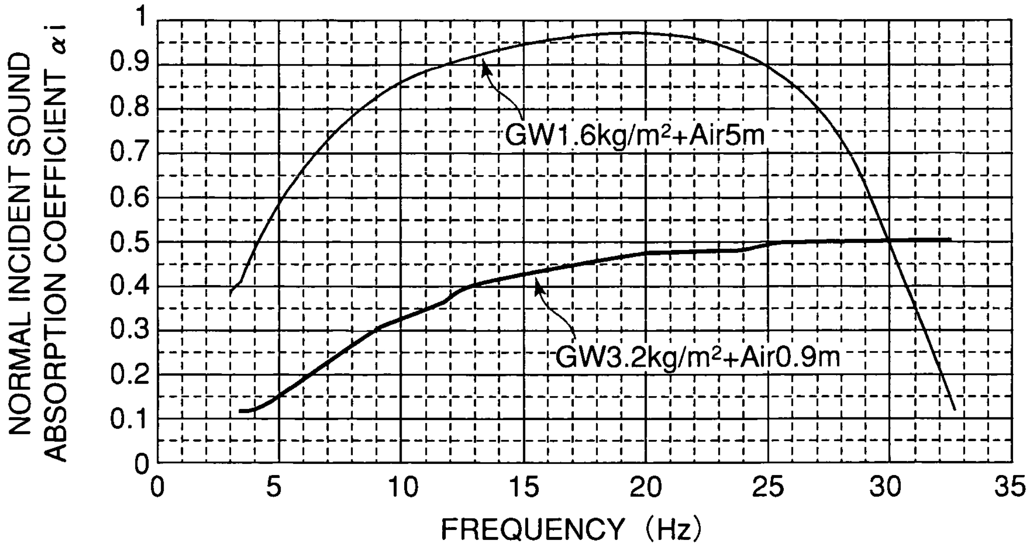
NORMAL INCIDENT SOUND ABSORPTION COEFFICIENT αi
1
0.9
0.8
0.7
0.6
0.5
0.4
0.3
0.2
0.1
0
0
5
10
15
20
25
30
35
FREQUENCY (Hz)
GW1.6kg/m2+Air5m
GW3.2kg/m2+Air0.9m

FIG. 11

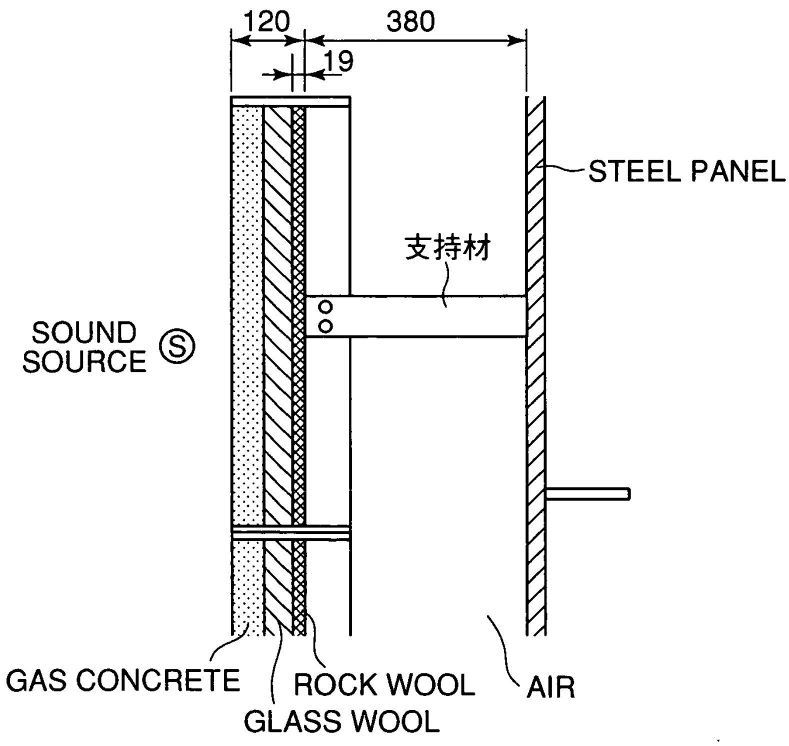
120
380
19
STEEL PANEL
支持材
SOUND SOURCE
S
GAS CONCRETE
ROCK WOOL
AIR
GLASS WOOL

FIG. 12

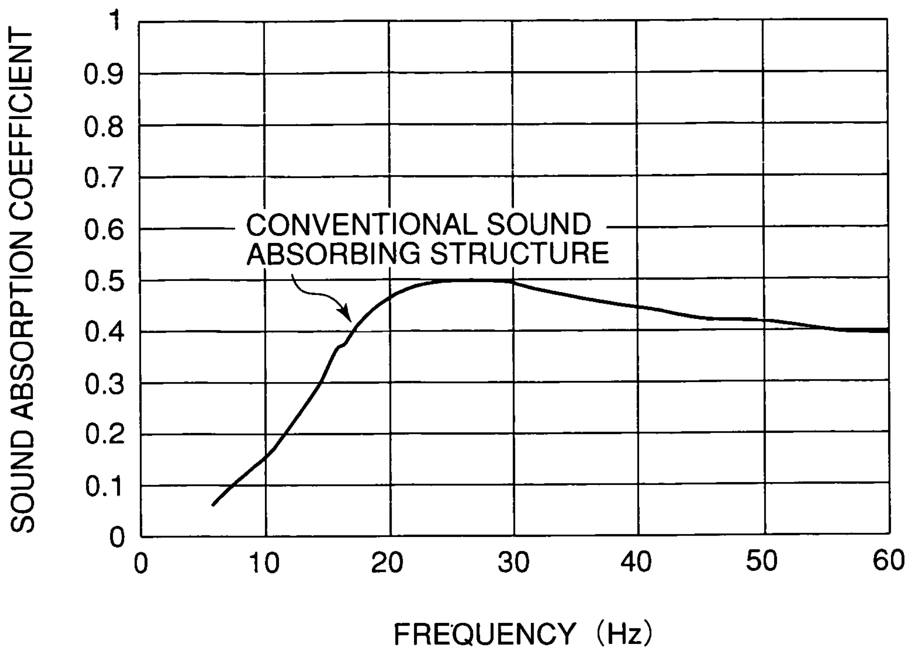
SOUND ABSORPTION COEFFICIENT
1
0.9
0.8
0.7
0.6
0.5
0.4
0.3
0.2
0.1
0
CONVENTIONAL SOUND ABSORBING STRUCTURE
0
10
20
30
40
50
60
FREQUENCY (Hz)

FIG. 13

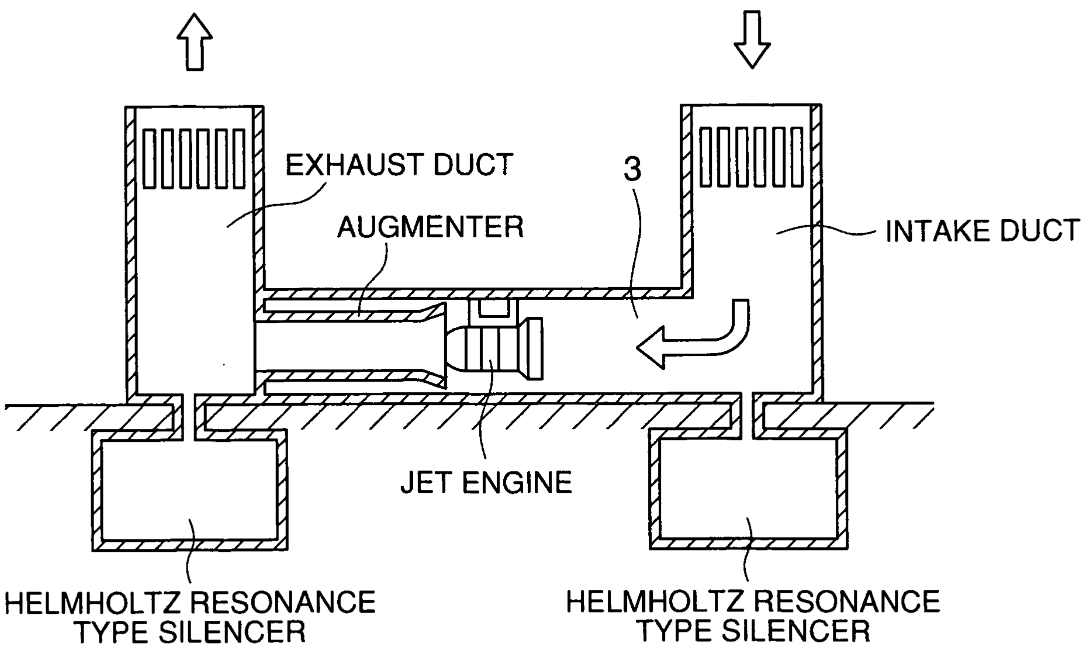
EXHAUST DUCT
3
AUGMENTER
INTAKE DUCT
JET ENGINE
HELMHOLTZ RESONANCE TYPE SILENCER
HELMHOLTZ RESONANCE TYPE SILENCER

FIG. 14

## INTERNATIONAL SEARCH REPORT

International application No.
PCT/JP2005/004781

A. CLASSIFICATION OF SUBJECT MATTER
Int.Cl[7] G10K11/16, B64F1/26, G01M15/00, G10K11/172

According to International Patent Classification (IPC) or to both national classification and IPC

B. FIELDS SEARCHED

Minimum documentation searched (classification system followed by classification symbols)
Int.Cl[7] G10K11/16, B64F1/26, G01M15/00, G10K11/172

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-52274 A (Mitsubishi Heavy Industries, Ltd.), 19 February, 2004 (19.02.04), Par. No. [0005] (Family: none) | 1,3<br>5,7 |
| X<br>Y | JP 7-168577 A (Asahi Chemical Industry Co., Ltd.), 04 July, 1995 (04.07.95), Par. Nos. [0002], [0004] (Family: none) | 1,3<br>5,7 |
| X<br>Y | JP 5-289673 A (Kobe Steel, Ltd.), 05 November, 1993 (05.11.93), Par. No. [0005] (Family: none) | 1,3,4<br>5,7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 June, 2005 (15.06.05) | Date of mailing of the international search report<br>05 July, 2005 (05.07.05) |
| Name and mailing address of the ISA/<br>Japanese Patent Office<br>Facsimile No. | Authorized officer<br><br>Telephone No. |

Form PCT/ISA/210 (second sheet) (January 2004)

INTERNATIONAL SEARCH REPORT

International application No.
PCT/JP2005/004781

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2002-73036 A (Nissan Motor Co., Ltd.),<br>12 March, 2002 (12.03.02),<br>Par. Nos. [0049], [0051], [0067], [0069]<br>& US 2002/0027997 A1 | 1-3<br>5-7 |
| X<br>Y | JP 2001-306080 (Nissan Motor Co., Ltd.),<br>02 November, 2001 (02.11.01),<br>Par. Nos. [0023] to [0025], [0064] to [0070]<br>(Family: none) | 1,3,4<br>5,7 |
| Y | JP 2000-318696 A (Nippon Yuso Enjiniaringu Kabushiki Kaisha),<br>21 November, 2000 (21.11.00),<br>Par. Nos. [0002], [0020], [0021]<br>(Family: none) | 5,7 |
| A | JP 58-47700 A (Kobe Steel, Ltd.),<br>19 March, 1983 (19.03.83),<br>Page 3, upper right column<br>(Family: none) | 5-7 |
| A | JP 8-6569 A (Chugai Co., Ltd.),<br>12 January, 1996 (12.01.96),<br>Par. No. [0012]<br>(Family: none) | 1-7 |
| A | JP 9-111906 A (Metzeler Schaum GmbH),<br>28 April, 1997 (28.04.97),<br>& EP 742322 A1 & DE 19516819 A<br>& CN 1143143 A & CZ 9601258 A<br>& ES 2135132 T & SK 57596 A<br>& KR 229250 B | 1-7 |
| A | JP 11-351609 A (Shinko Kogyo Co., Ltd.),<br>24 December, 1999 (24.12.99),<br>(Family: none) | 1-7 |
| A | JP 3-125704 A (Sekisui Chemical Co., Ltd.),<br>29 May, 1991 (29.05.91),<br>(Family: none) | 1-7 |
| A | JP 2003-58168 A (Dokuritsu Gyosei Hojin Uchu Koku Kenkyu Kaihatsu Kiko),<br>28 February, 2003 (28.02.03),<br>(Family: none) | 1-7 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001032400 A
- JP 2003307467 A
- JP 10140700 A